# EUROPEAN PATENT APPLICATION

(11) **EP 4 651 217 A2**
(43) Date of publication of application: **19.11.2025**
(21) Application number: 25175954.4
(22) Date of filing: 13.05.2025
(51) Int. Cl.: H01M 4/04, H01M 4/139, B05C 5/02, B05D 1/36, B05D 5/12

(54) **METHOD AND APPARATUS FOR COATING ACTIVE MATERIAL**

(30) Priority: 16.05.2024 KR 20240063661
(71) Applicant: SAMSUNG SDI CO., LTD., Yongin-si, Gyeonggi-do 17084 (KR)
(72) Inventor: LEE, Junsub, 17084 Yongin-si (KR); JUN, Pilgoo, 17084 Yongin-si (KR)
(74) Representative: Marks & Clerk LLP

(57) **Abstract**

An active material coating method includes: forming first and second coating lines on a first surface of a base material; forming a first active material coating layer between the first and second coating lines on the first surface of the base material; forming third and fourth coating lines on a second surface of the base material; forming second active material coating layer between the third and fourth coating lines on the second surface of the base material; forming a first etched active material coating layer by etching a part of the first active material coating layer; determining a positional relationship between the first etched active material coating layer on the first surface and the second active material coating layer on the second surface ; and forming a second etched active material coating layer by etching a part of the second active material coating layer based on the positional relationship.

## Description

### BACKGROUND

### 1. Field

Aspects of the present disclosure relate to an active material coating method and an apparatus using the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode assembly of a secondary battery may include a plate having active material coating layers. The active material coating layers may be present on both sides of the plate. For example, the electrode assembly may be formed by arranging a negative electrode active material coating layer and/or a positive electrode active material coating layer on both sides of the plate and winding or overlapping the plate.

As positions of the active material coating layers formed on both sides of the plate are aligned with each other, the power of the secondary battery may increase. However, it is difficult to completely align the positions of the active material coating layers formed on both sides of the plate due to movement of a base material or movement of a position of a die for forming the active material coating layers.

The above information disclosed in this Background section is for enhancement of understanding of the background of the present disclosure, and therefore, it may contain information that does not constitute related (or prior) art.

### SUMMARY

Aspects of some embodiments of the present disclosure are directed to an active material coating method and an apparatus using the same for solving the above problems. Aspects of some embodiments of the present disclosure are directed to a method for forming a plurality of coating lines and forming active material coating layers between the coating lines, and an apparatus using the same.

These and other aspects and features of the present disclosure will be described in or will be apparent from the following description of embodiments of the present disclosure.

According to some embodiments of the present disclosure there is provided an active material coating method including: forming, by a coating line forming device, a first coating line and a second coating line spaced apart from the first coating line on a first surface of a base material; forming, by a coating layer forming device, a first active material coating layer between the first coating line and the second coating line on the first surface of the base material; forming, by the coating line forming device, a third coating line and a fourth coating line spaced apart from the third coating line on a second surface of the base material; forming, by the coating layer forming device, a second active material coating layer between the third coating line and the fourth coating line on the second surface of the base material; forming, by an etching device, a first etched active material coating layer by etching at least a part of the first active material coating layer; determining, by a controller (or control unit), a positional relationship between the first etched active material coating layer on the first surface of the base material and the second active material coating layer on the second surface of the base material; and forming, by the etching device, a second etched active material coating layer by etching at least a part of the second active material coating layer based on the positional relationship (or determination result).

In some embodiments, the active material coating method further includes: transporting, by a transport device, the base material in one direction, wherein the first coating line, the second coating line, the third coating line, the fourth coating line, the first active material coating layer, and the second active material coating layer are formed parallel to the transport direction of the base material.

In some embodiments, the forming of the first coating line and the second coating line spaced apart from the first coating line includes: forming, by the coating line forming device, the first coating line by applying a coating solution to a first line on the first surface of the base material; and forming, by the coating line forming device, the second coating line by applying the coating solution to a second line spaced apart from the first line on the first surface of the base material, and wherein the forming of the third coating line and the fourth coating line spaced apart from the third coating line includes: forming, by the coating line forming device, the third coating line by applying the coating solution to a third line on the second surface of the base material; and forming, by the coating line forming device, the fourth coating line by applying the coating solution to a fourth line spaced apart from the third line on the second surface of the base material.

In some embodiments, a viscosity of the coating solution is 8,000 CPS or more.

In some embodiments, each of the first coating line to the fourth coating line includes at least one of a binder, a ceramic, or polyimide (PI).

In some embodiments, the forming of the first active material coating layer includes: applying, by an active material application device included in the coating layer forming device, a first active material slurry between the first coating line and the second coating line on the first surface of the base material, wherein the forming of the second active material coating layer includes: applying, by the active material application device, a second active material slurry between the third coating line and the fourth coating line on the second surface of the base material, and wherein the method further includes: forming, by a drying device of the coating layer forming device, at least one of the first active material coating layer or the second active material coating layer by drying the base material.

In some embodiments, the forming of the first etched active material coating layer includes: receiving, by the controller (or control unit), a first image obtained by capturing the first surface of the base material on which the first active material coating layer is formed; determining, by the controller (or control unit), positions of the first coating line and the second coating line on the first surface of the base material based on the first image; etching, by the etching device, the first coating line and at least a part of the first active material coating layer with a first width based on the determined position of the first coating line; and etching, by the etching device, the second coating line and at least a part of the first active material coating layer with the first width based on the determined position of the second coating line.

In some embodiments, the determining of the positional relationship includes: receiving, by the controller (or control unit), a second image obtained by capturing the second surface of the base material on which the second active material coating layer is formed; receiving, by the controller (or control unit), a third image obtained by capturing the first surface of the base material on which the first etched active material coating layer is formed; and determining, by the controller (or control unit), the positional relationship between the first etched active material coating layer and the second active material coating layer based on the second image and the third image.

In some embodiments, the first surface of the base material faces the second surface of the base material, the first etched active material coating layer is etched to form an edge portion on one side of the first etched active material coating layer, and the determining of the positional relationship between the first etched active material coating layer and the second active material coating layer based on the second image and the third image includes: determining, by the controller (or control unit), a positional relationship between the edge portion and the second active material coating layer on the second surface of the base material.

In some embodiments, the first surface of the base material faces the second surface of the base material, the first etched active material coating layer is etched to form an edge portion on one side of the first etched active material coating layer, and the forming of the second etched active material coating layer includes: etching, by the etching device, the second active material coating layer with a second width from a position on the second surface of the base material corresponding to the edge portion toward an outside of the base material.

In some embodiments, the forming of the first etched active material coating layer includes: etching, by the etching device, at least a part of the first coating line and at least a part of the second coating line together with at least a part of the first active material coating layer, and wherein the etching of the at least a part of the second active material coating layer includes: etching, by the etching device, at least a part of the third coating line and at least a part of the fourth coating line together with at least a part of the second active material coating layer.

In some embodiments, the first active material coating layer and the second active material coating layer are included in an active material coating layer, the first coating line to the fourth coating line are included in a coating line, the active material coating layer includes a plurality of boundary portions in contact with the coating line, and an angle of a bent region with respect to the plurality of boundary portions is 70 degrees to 80 degrees.

In some embodiments, the first etched active material coating layer and the second etched active material coating layer are included in an etched active material coating layer, the etched active material coating layer is etched to form the edge portion on one side of the etched active material coating layer, and an angle of the bent region with respect to the edge portion is 80 degrees to 90 degrees.

In some embodiments, the active material coating method further includes: removing, by a foreign substance removing device, foreign substances positioned on the base material.

In some embodiments, the first surface of the base material faces the second surface of the base material, the first active material coating layer includes a first boundary portion in contact with the first coating line and a second boundary portion in contact with the second coating line, the second active material coating layer includes a third boundary portion in contact with the third coating line and a fourth boundary portion in contact with the fourth coating line, the first etched active material coating layer includes a first edge portion formed by etching the first boundary portion and a second edge portion formed by etching the second boundary portion, the second etched active material coating layer includes a third edge portion formed by etching the third boundary portion and a fourth edge portion formed by etching the fourth boundary portion, a boundary of the first edge portion corresponds to a boundary of the third edge portion based on a width direction of the base material, and a boundary of the second edge portion corresponds to a boundary of the fourth edge portion based on the width direction of the base material.

According to some embodiments of the present disclosure there is provided an active material coating apparatus including: a coating line forming device configured to form a first coating line and a second coating line spaced apart from the first coating line on a first surface of a base material, and to form a third coating line and a fourth coating line spaced apart from the third coating line on a second surface of the base material; a coating layer forming device configured to form a first active material coating layer between the first coating line and the second coating line, and to form a second active material coating layer between the third coating line and the fourth coating line; an etching device configured to form a first etched active material coating layer by etching at least a part of the first active material coating layer; and a controller (or control unit) configured to determine a positional relationship between the first etched active material coating layer on the first surface of the base material and the second active material coating layer on the second surface of the base material, wherein the etching device is configured to form a second etched active material coating layer by etching at least a part of the second active material coating layer based on the positional relationship (or determination result).

In some embodiments, the coating layer forming device further includes: an active material application device configured to apply an active material slurry between the first coating line and the second coating line on the first surface of the base material, and to apply an active material slurry between the third coating line and the fourth coating line on the second surface of the base material; and a drying device configured to form at least one of the first active material coating layer or the second active material coating layer by drying the base material.

In some embodiments, the active material coating apparatus further includes: a first image sensor configured to generate a first image obtained by capturing the first surface of the base material on which the first active material coating layer is formed, wherein the controller is configured to determine positions of the first coating line and the second coating line on the first surface of the base material based on the first image, and wherein the etching device is configured to etch the first coating line and at least a part of the first active material coating layer with a first width, and to etch the second coating line and at least a part of the first active material coating layer with the first width.

In some embodiments, the active material coating apparatus further includes: a second image sensor configured to generate a second image obtained by capturing the second surface of the base material on which the second active material coating layer is formed; and a third image sensor configured to generate a third image obtained by capturing the first surface of the base material on which the first etched active material coating layer is formed, wherein the controller configured to determine the positional relationship between the first etched active material coating layer and the second active material coating layer based on the second image and the third image.

In some embodiments, the active material coating apparatus further includes: a transport device configured to transport the base material in one direction; and a foreign substance removing device configured to remove foreign substances positioned on the base material.

According to some embodiments of the present disclosure, both sides of the active material coating layer on the first surface and the active material coating layer on the second surface are etched, and thus, the boundaries on both sides of the active material coating layer on the first surface and the boundaries on both sides of the active material coating layer on the second surface may completely coincide with each other. A secondary battery including the plate on which the active material coating layers whose boundaries coincide with each other are formed can have higher power and improved lifespan.

According to some embodiments of the present disclosure, as the bent region of the edge portion formed in the etched active material coating layer becomes nearly vertical, the electrical utilization of both sides of the active material coating layer can be increased.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic diagram illustrating a plate formed by an active material coating method according to some embodiments of the present disclosure;
FIG. 2 is a schematic diagram illustrating an active material coating apparatus according to some embodiments of the present disclosure;
FIG. 3 is a diagram illustrating an example of an image obtained by capturing a base material on which a plurality of coating lines are formed according to some embodiments of the present disclosure;
FIG. 4 is a diagram illustrating an example of an image obtained by capturing the base material on which active material coating layers are formed according to some embodiments of the present disclosure;
FIG. 5 is a diagram illustrating a scene in which a first coating line and a second coating line are formed on a first surface of the base material according to some embodiments of the present disclosure;
FIG. 6 is a diagram illustrating a scene in which the active material coating layer is formed on the first surface of the base material according to some embodiments of the present disclosure;
FIG. 7 is a diagram illustrating a scene in which a third coating line and a fourth coating line are formed on a second surface of the base material according to some embodiments of the present disclosure;
FIG. 8 is a diagram illustrating a scene in which the active material coating layer is formed on the first surface of the base material according to some embodiments of the present disclosure;
FIG. 9 is a diagram illustrating a scene in which a first etched active material coating layer is formed on the first surface of the base material according to some embodiments of the present disclosure;
FIG. 10 is a diagram illustrating a scene in which a second etched active material coating layer is formed on a second surface of the base material according to some embodiments of the present disclosure;
FIG. 11 is a diagram illustrating a boundary portion of the active material coating layer according to some embodiments of the present disclosure;
FIG. 12 is a diagram illustrating an edge portion of an etched active material coating layer according to some embodiments of the present disclosure; and
FIG. 13 is a flow chart illustrating an active material coating method according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

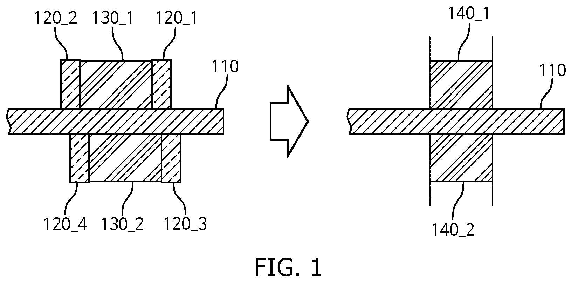

FIG. 1 is a schematic diagram illustrating a plate formed by an active material coating method according to some embodiments of the present disclosure. In some embodiments, a base material 110 (e.g., a metal thin film base material) for forming the plate may be prepared. For example, the base material 110 may include, but is not limited to, aluminum foil, copper foil, nickel foil, a polymer composite base material coated with metal, and/or the like. For example, various suitable materials that may be used for the plate (or electrode) may be used as the base material 110.

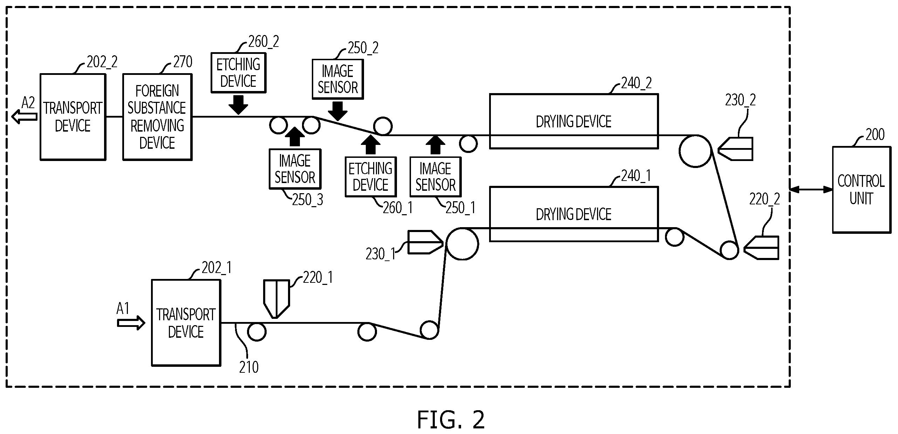

An active material coating apparatus may include a coating line forming device, a coating layer forming device, an etching device, a control unit (e.g., a controller) 200, an image sensor, a transport device 202_1 and 202_2, and a foreign substance removing device. The components included in the active material coating apparatus are described in further detail with reference to FIG. 2.

The coating line forming device may form a first coating line 120_1 on a first surface of the base material 110. The coating line forming device may form a second coating line 120_2 at a position spaced apart from the first coating line 120_1 on the first surface of the base material 110. Thereafter, the coating layer forming device may form a first active material coating layer 130_1 between the first coating line 120_1 and the second coating line 120_2 on the first surface of the base material.

Similarly, the coating line forming device may form a third coating line 120_3 on a second surface of the base material 110. In some embodiments, the second surface of the base material 110 may be a surface facing the first surface of the base material 110. The coating line forming device may form a fourth coating line 120_4 at a position spaced apart from the third coating line 120_3 on the second surface of the base material 110. Thereafter, the coating layer forming device may form a second active material coating layer 130_2 between the third coating line 120_3 and the fourth coating line 120_4 on the second surface of the base material.

The first active material coating layer 130_1 may include a first boundary portion in contact with the first coating line 120_1 and a second boundary portion in contact with the second coating line 120_2. The second active material coating layer 130_2 may include a third boundary portion in contact with the third coating line 120_3 and a fourth boundary portion in contact with the fourth coating line 120_4. Positions of the first boundary portion and the third boundary portion may not completely correspond to or be aligned with each other based on a width direction of the base material 110. Similarly, positions of the second boundary portion and the fourth boundary portion may not completely correspond to or be aligned with each other based on the width direction of the base material 110.

In some embodiments, the etching device may form a first etched active material coating layer 140_1 by etching at least a part of the first active material coating layer 130_1. In some embodiments, the first coating line 120_1 and the second coating line 120_2 may be etched together with at least a part of the first active material coating layer 130_1. An edge portion may be formed on one side or both sides by etching the first etched active material coating layer 140_1. For example, a first edge portion may be formed in the first etched active material coating layer 140_1 by etching the first boundary portion of the first active material coating layer 130_1. A second edge portion may be formed in the first etched active material coating layer 140_1 by etching the second boundary portion of the first active material coating layer 130_1.

The control unit (e.g., the controller) 200 may determine a positional relationship between the first etched active material coating layer 140_1 on the first surface of the base material and the second active material coating layer 130_2 on the second surface of the base material. The control unit 200 may transmit, to the etching device, the determination result or a control signal generated based on the determination result. The etching device may form a second etched active material coating layer 140_2 by etching at least a part of the second active material coating layer based on the determination result or the control signal.

In some embodiments, the etching device may form the second etched active material coating layer 140_2 by etching at least a part of the second active material coating layer 130_2. In some embodiments, the third coating line 120_3 and the fourth coating line 120_4 may be etched together with at least a part of the second active material coating layer 130_2. An edge portion may be formed on one side or both sides by etching the second etched active material coating layer 140_2. For example, a third edge portion may be formed in the second etched active material coating layer 140_2 by etching the third boundary portion of the second active material coating layer 130_2. A fourth edge portion may be formed in the second etched active material coating layer 140_2 by etching the fourth boundary portion of the second active material coating layer 130_2.

In some embodiments, a boundary of the first edge portion may correspond to or be aligned with a boundary of the third edge portion in the width direction of the base material 110. A boundary of the second edge portion may correspond to or be aligned with a boundary of the fourth edge portion based on the width direction of the base material 110. For example, a boundary of the active material coating layer formed on the first surface of the base material 110 and a boundary of the active material coating layer formed on the second surface of the base material 110 may coincide with each other based on the width direction of the base material 110. A secondary battery including the plate on which the active material coating layers whose boundaries coincide with each other are formed can have higher power and improved lifespan.

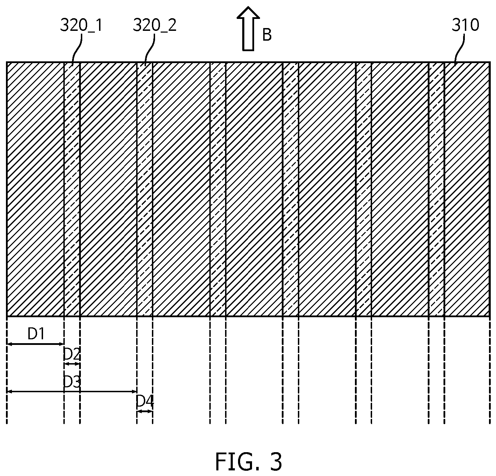

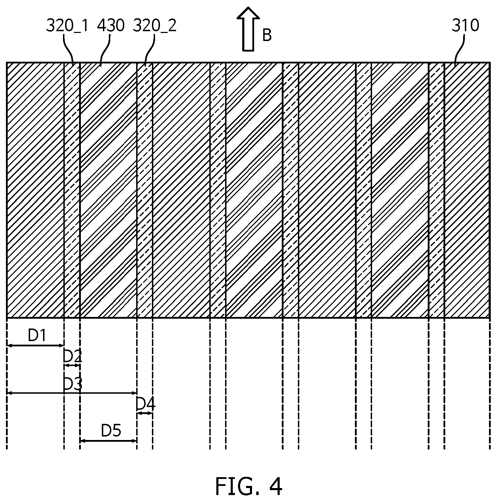

Referring to FIG. 1, although it has been illustrated that two coating lines 120_1 and 120_2 and one first active material coating layer 130_1 are formed on the first surface of the base material 110 and two coating lines 120_3 and 120_4 and one second active material coating layer 130_2 are formed on the second surface, the present disclosure is not limited thereto. For example, 2n coating lines and n first active material coating layers may be formed on the first surface of the base material 110, and 2n coating lines and n active material coating layers may be formed on the second surface (where, n is a natural number of 1 or more). Accordingly, n first etched active material coating layers may be formed on the first surface of the base material 110, and n second etched active material coating layers may be formed on the second surface. A plurality of active material coating layers will be described in further detail with reference to FIGS. 3 and 4.

FIG. 2 is a schematic diagram illustrating the active material coating apparatus according to some embodiments of the present disclosure. A base material 210 may be transported to the active material coating apparatus by the transport device. Referring to FIG. 2, the base material 210 may be transported in a direction A1 into the active material coating apparatus. The base material 210 on which an active material is coated may be transported in a direction A2 from the active material coating apparatus.

First, a first coating line forming device 220_1 included in the active material coating apparatus may form a first coating line and a second coating line spaced apart from the first coating line on a first surface of the base material 210. The coating lines may be formed by applying a coating solution. For example, the first coating line may be formed by applying the coating solution to a first line on the first surface of the base material. Similarly, the second coating line may be formed by applying the coating solution to a second line spaced apart from the first line on the first surface of the base material.

The coating solution may be applied by using a die or the like. For example, the coating solution may be 8,000 CPS or more. For example, the coating line may include at least one of a binder, a ceramic, or a polyimide (PI). In some embodiments, the binder is one of materials included in an active material slurry, and may cause an active material and a conductive material to adhere to a current collector, and may cause the active material slurry to be uniformly applied to the current collector. For example, a non-aqueous binder, an aqueous binder, a dry binder, or a combination thereof may be used as the binder.

In some embodiments, a first active material application device 230_1 included in the coating layer forming device may apply a first active material slurry between the first coating line and the second coating line on the first surface of the base material 210. The active material slurry may be applied by using a die or the like. In some embodiments, the active material slurry includes a positive electrode active material (or negative electrode active material), a conductive material, a binder, an additive, and the like, and may be applied to the base material to manufacture the plate. Thereafter, a first drying device 240_1 included in the coating layer forming device may dry the base material 210. The first active material coating layer may be formed by drying the active material slurry applied to the first surface of the base material 210.

In some embodiments, a second coating line forming device 220_2 may form a third coating line and a fourth coating line spaced apart from the third coating line on a second surface of the base material 210. The coating lines may be formed by applying a coating solution. In some embodiments, the coating solution may be the same material as the coating solution used to form the first coating line and the second coating line. For example, the third coating line may be formed by applying the coating solution to a third line on the second surface of the base material. Similarly, the fourth coating line may be formed by applying the coating solution to a fourth line spaced apart from the third line on the second surface of the base material.

In some embodiments, a first adjustment image sensor may capture the first surface of the base material 210 immediately after the first coating line and the second coating line are formed on the base material 210. The control unit (e.g., the controller) 200 may receive an image captured by the first adjustment image sensor, and may determine positions and widths of the first coating line and the second coating line on the first surface of the base material 210 based on the image. The control unit 200 may modify positions of the first line and the second line based on the determined positions and widths of the first coating line and the second coating line. The control unit 200 may regulate the amount of coating solution applied to form the first coating line and/or the second coating line based on the determined positions and widths of the first coating line and the second coating line. Information regarding the modified positions of the first line and the second line and the regulated amount of applied coating solution may be transmitted to the first coating line forming device 220_1.

In some embodiments, the control unit 200 may determine positions of the third line and the fourth line based on the determined positions and widths of the first coating line and the second coating line. For example, the control unit 200 may determine the positions of the third line and the fourth line such that the position of the third line coincides with the position of the first coating line and the position of the fourth line coincides with the position of the second coating line on the second surface of the base material 210 based on a width direction of the base material 210. The control unit 200 may regulate the amount of coating solution applied to form the third coating line and/or the fourth coating line such that the width of the third coating line coincides with the width of the first coating line and the width of the fourth coating line coincides with the width of the second coating line. Information regarding the determined positions of the third line and the fourth line and the regulated amount of applied coating solution may be transmitted to the second coating line forming device 220_2.

In some embodiments, a second adjustment image sensor may capture the second surface of the base material 210 after the third coating line and the fourth coating line are formed on the base material 210. The control unit (e.g., the controller) 200 may receive an image captured by the second adjustment image sensor, and may determine positions and widths of the third coating line and the fourth coating line on the second surface of the base material 210 based on the image. The control unit 200 may modify positions of the third line and the fourth line based on the determined positions and widths of the third coating line and the fourth coating line. The control unit 200 may regulate the amount of coating solution applied to form the third coating line and/or the fourth coating line based on the determined positions and widths of the third coating line and the fourth coating line. Information regarding the modified positions of the third line and the fourth line and the regulated amount of applied coating solution may be transmitted to the second coating line forming device 220_2. Additionally, the control unit 200 may consider the image captured by the first adjustment image sensor together when the positions of the third line and the fourth line are modified. The control unit 200 may consider the image captured by the first adjustment image sensor together when the amount of coating solution applied to form the third coating line and/or the fourth coating line is regulated.

In some embodiments, a second active material application device 230_2 included in the coating layer forming device may apply a second active material slurry between the third coating line and the fourth coating line on the second surface of the base material 210. The active material slurry used in the second active material application device 230_2 and the active material slurry used in the first active material application device 230_1 may be the same material or different materials. For example, the active material slurry used in the second active material application device 230_2 may be a positive electrode active material slurry, and the active material slurry used in the first active material application device 230_1 may be a negative electrode active material slurry. In some examples, the active material slurry used in the second active material application device 230_2 and the active material slurry used in the first active material application device 230_1 may be negative electrode active material slurries.

Thereafter, a second drying device 240_2 included in the coating layer forming device may dry the base material 210. A second active material coating layer may be formed by drying the active material slurry applied to the second surface of the base material 210.

In some embodiments, a first image sensor 250_1 may generate a first image by capturing the first surface of the base material 210 on which the first active material coating layer is formed. The control unit 200 may receive the first image, and may determine the positions and/or widths of the first coating line and the second coating line on the first surface of the base material 210 based on the first image. A first etching device 260_1 may etch the first coating line and at least a part of the first active material coating layer on the base material 210 with a first width. The first etching device 260_1 may etch the second coating line and at least a part of the first active material coating layer on the base material 210 with the first width. In some embodiments, the control unit 200 may determine a position where etching is started based on the position of the first coating line and the position of the second coating line, and may transmit information regarding the position to the etching device. The control unit 200 may determine a size of the first width based on the width of the first coating line and the width of the second coating line, and may transmit information regarding the first width to the first etching device 260_1. Additionally, the etching may include, but is not limited to, laser etching.

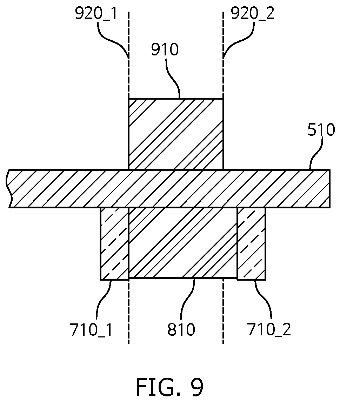

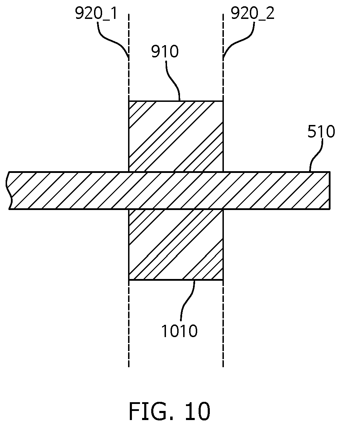

In some embodiments, a second image sensor 250_2 may generate a second image by capturing the second surface of the base material 210 on which the second active material coating layer is formed. A third image sensor 250_3 may generate a third image by capturing the first surface of the base material 210 on which the first etched active material coating layer is formed. The control unit 200 may determine a positional relationship between the first etched active material coating layer and the second active material coating layer based on the second image and the third image. A second etching device 260_2 may form a second etched active material coating layer by etching at least a part of the second active material coating layer based on the determination result. The second etching device 260_2 may etch at least a part of the second etched active material coating layer, the third coating line, and the fourth coating line. A procedure of forming the second etched active material coating layer will be described in further detail with reference to FIGS. 9 and 10.

In some embodiments, foreign substances may be positioned on the base material 210 on which the first etched active material coating layer and the second etched active material coating layer are formed. For example, the foreign substances may include burrs generated by etching the coating lines and the active material coating layers. The foreign substances on the base material 210 on which the first etched active material coating layer and the second etched active material coating layer are formed may be removed by using a foreign substance removing device 270.

The base material coated with the active materials by the active material coating apparatus according to the present disclosure may be used as the plate of the secondary battery. Such a secondary battery can produce high power, and can store electrical energy (e.g., maximum electrical energy). Based on the image on which the base material 210 is captured, the position of the active material coating layer on the first surface and the position of the active material coating layer on the second surface may correspond to each other, but it is difficult for the positions to completely coincide with each other. In some embodiments, both sides of the active material coating layer on the first surface and the active material coating layer on the second surface are etched, and thus, the boundaries on both sides of the active material coating layer on the first surface and the boundaries on both sides of the active material coating layer on the second surface may completely and maximally coincide with each other.

FIG. 3 is a diagram illustrating an example of an image obtained by capturing a base material 310 on which a plurality of coating lines 320_1 and 320_2 are formed according to some embodiments of the present disclosure. FIG. 3 may illustrate the image captured by the first adjustment image sensor or the image captured by the second adjustment image sensor described with reference to FIG. 2. For example, FIG. 3 may illustrate an image obtained by capturing a first surface of the base material 310 on which the plurality of coating lines 320_1 and 320_2 are formed, or an image obtained by capturing a second surface of the base material 310 on which the plurality of coating lines 320_1 and 320_2 are formed.

In FIGS. 3 and 4, the image obtained by capturing the first surface of the base material 310 is described, but the same description equally applies to the image obtained by capturing the second surface of the base material 310. In addition, a first coating line 320_1, a second coating line 320_2, and a first active material coating layer 430 formed on the first surface of the base material 310 are described, but the same description equally applies to a third coating line, a fourth coating line, and a second active material coating layer formed on the second surface of the base material 310.

The base material 310 may be transported along one direction (e.g., direction B of FIG. 3). In some embodiments, the plurality of coating lines 320_1 and 320_2 may be formed parallel to the transport direction of the base material 310.

In some embodiments, a control unit 200 may determine positions of the plurality of coating lines 320_1 and 320_2 on the first surface of the base material 310 based on the image obtained by capturing the first surface of the base material 310 on which the plurality of coating lines 320_1 and 320_2 are formed. For example, the control unit 200 may calculate a distance D1 from one side of the base material to one side of the first coating line. In some embodiments, one side of the base material 310 may be a side of both sides of the base material 310, which is closer to the first coating line 320_1. In addition, one side of the first coating line 320_1 may be a side of both sides of the first coating line 320_1, which is closer to one side of the base material 310.

Similarly, the control unit 200 may calculate a distance D3 from one side of the base material to one side of the second coating line. In some embodiments, one side of the base material 310 may be a side of both sides of the base material 310, which is closer to the second coating line 320_2. In addition, one side of the second coating line 320_2 may be a side of both sides of the second coating line 320_2, which is closer to one side of the base material 310.

In some embodiments, the control unit 200 may calculate widths D2 and D4, and the like of the plurality of coating lines 320_1 and 320_2 based on the image obtained by capturing the first surface of the base material 310 on which the plurality of coating lines 320_1 and 320_2 are formed. For example, the control unit 200 may calculate the width D2 of the first coating line by calculating a distance between both sides of the first coating line 320_1. Similarly, the control unit 200 may calculate the width (D4) of the second coating line by calculating a distance between both sides of the second coating line 320_2.

FIG. 4 is a diagram illustrating an example of the image obtained by capturing the base material 310 on which the active material coating layer 430 is formed according to some embodiments of the present disclosure. FIG. 4 may illustrate the image captured by the first image sensor 250_1 or the image captured by the second image sensor 250_2 described with reference to FIG. 2. For example, FIG. 4 may illustrate the image obtained by capturing the first surface of the base material 310 on which the plurality of coating lines 320_1 and 320_2 and the active material coating layer 430 are formed or the image obtained by capturing the second surface of the base material 310 on which the plurality of coating lines and the active material coating layer are formed.

The base material 310 may be transported along one direction (e.g., direction B of FIG. 3). In some embodiments, the active material coating layer 430 may be formed parallel to the transport direction of the base material 310. Referring to FIG. 4, an active material coating layer may be formed parallel to the transport direction of the base material 310 between an (2n-1)-th coating line and an (2n)-th coating line (where, n is a natural number of 1 or more).

In some embodiments, the active material coating layer 430 may include a first boundary portion in contact with the first coating line 320_1 and a second boundary portion in contact with the second coating line 320_2. The control unit 200 may determine a position of the active material coating layer 430 based on the image obtained by capturing the first surface of the base material 310 on which the active material coating layer 430 is formed. For example, the control unit 200 may calculate a distance D1 + D2 between one side of the base material and the first boundary portion. In addition, the control unit 200 may calculate a width D5 of the active material coating layer based on the image obtained by capturing the first surface of the base material 310 on which the active material coating layer 430 is formed. For example, the control unit 200 may calculate the width D5 of the active material coating layer by calculating a distance between the first boundary portion and the second boundary portion of the active material coating layer 430.

As described above, the control unit 200 may calculate the positions and widths of the plurality of coating lines 320_1 and 320_2 and the active material coating layer 430 on the first surface of the base material 310. Similarly, the control unit 200 may calculate the positions and widths of the plurality of coating lines and the active material coating layer on the second surface of the base material 310. In some embodiments, because the positions are calculated based on one side of the base material 310, the control unit 200 may determine a positional relationship between the plurality of coating lines 320_1 and 320_2 on the first surface and the plurality of coating lines on the second surface based on a width direction of the base material 310. Similarly, the control unit 200 may determine a positional relationship between the active material coating layer 430 on the first surface and the active material coating layer on the second surface based on the width direction of the base material 310. In addition, through the above-described method, the control unit 200 may determine a positional relationship between an etched active material coating layer on the first surface and the active material coating layer on the second surface.

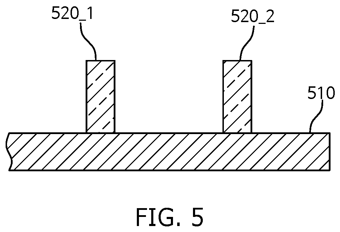

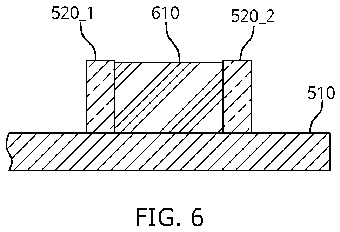

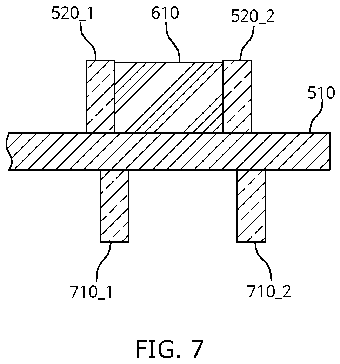

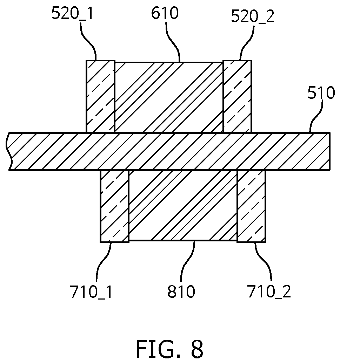

FIG. 5 is a diagram illustrating a scene in which a first coating line 520_1 and a second coating line 520_2 are formed on a first surface of a base material 510 according to some embodiments of the present disclosure. FIG. 6 is a diagram illustrating a scene in which a first active material coating layer 610 is formed on the first surface of the base material 510 according to some embodiments of the present disclosure. FIG. 7 is a diagram illustrating a scene in which a third coating line 710_1 and a fourth coating line 710_2 are formed on a second surface of the base material 510 according to some embodiments of the present disclosure. FIG. 8 is a diagram illustrating a scene in which a second active material coating layer 810 is formed on the second surface of the base material 510 according to some embodiments of the present disclosure. FIG. 9 is a diagram illustrating a scene in which a first etched active material coating layer 910 is formed on the first surface of the base material 510 according to some embodiments of the present disclosure. FIG. 10 is a diagram illustrating a scene in which a second etched active material coating layer 1010 formed on the second surface of the base material 510 according to some embodiments of the present disclosure.

A procedure of forming the first coating line 520_1, the second coating line 520_2, the first active material coating layer 610, and the first etched active material coating layer 910 on the first surface of the base material 510 and the third coating line 710_1, the fourth coating line 710_2, the second active material coating layer 810, and the second etched active material coating layer 1010 on the second surface of the base material 510 in FIGS. 5 to 10 may be understood based on the contents described with reference to FIGS. 1 and 2. In addition, a larger number of coating lines, active material coating layers, and etched active material coating layers than those illustrated in FIGS. 5 to 10 may be formed on one base material.

Referring to FIG. 5, the first coating line 520_1 and the second coating line 520_2 may be formed on the first surface of the base material 510. The first coating line 520_1 may be formed along a first line, and the second coating line 520_2 may be formed along a second line.

Referring to FIG. 6, the first active material coating layer 610 may be formed between the first coating line 520_1 and the second coating line 520_2 on the first surface of the base material 510. The first active material coating layer 610 may include a first boundary portion in contact with the first coating line 520_1 and a second boundary portion in contact with the second coating line 520_2.

Referring to FIG. 7, the third coating line 710_1 and the fourth coating line 710_2 may be formed on the second surface of the base material 510. In some embodiments, the second surface of the base material 510 may face the first surface of the base material 510. The third coating line 710_1 may be formed along a third line, and the fourth coating line 710_2 may be formed along a fourth line.

In some embodiments, the control unit 200 may determine positions and widths of the first coating line 520_1 and the second coating line 520_2 on the first surface based on the image obtained by capturing the first surface of the base material 510 on which the first coating line 520_1 and the second coating line 520_2 are formed. For example, the control unit 200 may calculate the positions and widths of the first coating line 520_1 and the second coating line 520_2 based on one side of the base material 510. Thereafter, the control unit 200 may determine positions of the third line and the fourth line based on the calculated positions and widths of the first coating line 520_1 and second coating line 520_2. For example, the control unit 200 may determine the positions of the third line and the fourth line such that the position of the third line on the second surface of the base material 510 coincides with and is aligned with the position of the first coating line 520_1 and the position of the fourth line coincides with and is aligned with the position of the second coating line 520_2 based on a width direction of the base material 510. The third coating line 710_1 may be formed on the second surface of the base material 510 based on the determined position of the third line, and the fourth coating line 710_2 may be formed on the first surface of the base material 510 based on the determined position of the fourth line.

Referring to FIG. 8, the second active material coating layer 810 may be formed between the third coating line 710_1 and the fourth coating line 710_2 on the second surface of the base material 510. Based on the width direction of the base material 510, the first coating line 520_1 and the third coating line 710_1 correspond to each other, and the second coating line 520_2 and the fourth coating line 710_2 correspond to each other, and thus, the first active material coating layer 610 and the second active material coating layer 810 may correspond to each other. However, even though the coating lines correspond to each other, there may be a set or predetermined positional difference. The second active material coating layer 810 may include a third boundary portion in contact with the third coating line 710_1 and a fourth boundary portion in contact with the fourth coating line 710_2.

Referring to FIG. 9, the first etched active material coating layer 910 may be formed by etching at least a part of the first active material coating layer 610 formed on the first surface of the base material 510. For example, the control unit 200 may determine the position of the first coating line 520_1 on the first surface of the base material 510 based on a first image obtained by capturing the first surface of the base material 510 on which the first active material coating layer 610 is formed. The first coating line 520_1 and at least a part of the first active material coating layer 610 may be etched with a first width based on the determined position of the first coating line 520_1. Similarly, the control unit 200 may determine the position of the second coating line 520_2 on the first surface of the base material 510 based on the first image obtained by capturing the first surface of the base material 510 on which the first active material coating layer 610 is formed. The second coating line 520_2 and at least a part of the first active material coating layer 610 may be etched with the first width (or a width different from the first width) based on the determined position of the second coating line 520_2.

In some examples, the first width may be greater than the width of the first coating line 520_1 and/or the width of the second coating line 520_2. The etching may be performed with a depth less than or equal to a height of the first coating line 520_1 or a height of the second coating line 520_2.

In some embodiments, at least a part of the first coating line 520_1 and/or at least a part of the second coating line 520_2 may be etched together with at least a part of the first active material coating layer 610 formed on the first surface of the base material 510. Referring to FIG. 9, although it has been illustrated that the first coating line 520_1 and the second coating line 520_2 are etched in whole, a part of the first coating line 520_1 and/or a part of the second coating line 520_2 may be etched.

The first etched active material coating layer 910 may include a first edge portion formed by etching the first boundary portion. The first etched active material coating layer 910 may include a second edge portion formed by etching the second boundary portion. A first position 920_1 may represent a boundary of the first edge portion. A second position 920_2 may represent a boundary of the second edge portion.

Referring to FIG. 10, the second etched active material coating layer 1010 may be formed by etching at least a part of the second active material coating layer 810 formed on the second surface of the base material 510. For example, the control unit 200 may receive a second image obtained by capturing the second surface of the base material 510 on which the second active material coating layer 810 is formed, and a third image obtained by capturing the first surface of the base material 510 on which the first etched active material coating layer 910 is formed. The control unit 200 may determine a positional relationship between the first etched active material coating layer 910 and the second etched active material coating layer 1010 based on the second image and the third image.

For example, the control unit 200 may calculate the first position 920_1 which is the boundary of the first edge portion and the second position 920_2 which is the boundary of the second edge portion. The control unit 200 may determine the first position 920_1 and the second position 920_2 on the second surface of the base material 510. The control unit 200 may determine a positional relationship between the first position 920_1, the second position 920_2, and the second active material coating layer 810.

On the second surface of the base material 510, the second active material coating layer 810 may be etched with a second width from the first position 920_1 toward an outside of the base material 510. In some embodiments, the outside of the base material 510 may represent a direction of one side of both sides of the second active material coating layer 810, which is closer to a starting point. For example, an outer direction of the base material 510 at the first position 920_1 may represent one side of the base material 510 positioned in a direction of the third coating line 710_1 (e.g., a left direction in FIG. 9). In other examples, an outer direction of the base material 510 at the second position 920_2 may represent one side of the base material 510 positioned in a direction of the fourth coating line 710_2 (e.g., a right direction in FIG. 9).

In some embodiments, at least a part of the third coating line 710_1 and/or at least a part of the fourth coating line 710_2 may be etched together with at least a part of the second active material coating layer 810 formed on the second surface of the base material 510. Referring to FIG. 10, although it has been illustrated that the third coating line 710_1 and the fourth coating line 710_2 are etched in whole, a part of the third coating line 710_1 and/or a part of the fourth coating line 710_2 may be etched.

In some examples, the second width may be greater than the width of the third coating line 710_1 or the width of the fourth coating line 710_2. The etching may be performed with a depth less than or equal to a height of the third coating line 710_1 or a height of the fourth coating line 710_2.

In some embodiments, the second etched active material coating layer 1010 may include a third edge portion formed by etching the third boundary portion. The second etched active material coating layer 1010 may include a fourth edge portion formed by etching the fourth boundary portion. By the above-described configuration, even though the first active material coating layer 610 and the second active material coating layer 810 have a set or predetermined positional difference in the width direction of the base material 510, the positions of the first etched active material coating layer 910 and the second etched active material coating layer 1010 may accurately correspond to each other based on the width direction of the base material 510. For example, a boundary of the first edge portion may coincide with a boundary of the third edge portion at the first position 920_1, and a boundary of the second edge portion may coincide with a boundary of the fourth edge portion at the second position 920_2.

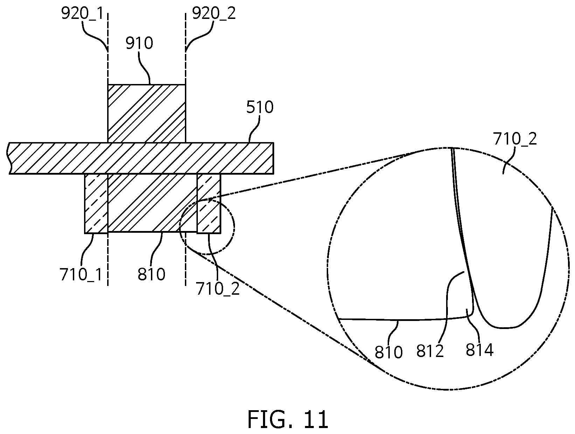

FIG. 11 is a diagram illustrating the boundary portion of the active material coating layer according to some embodiments of the present disclosure. FIG. 11 may illustrate an enlarged view of a fourth boundary portion 812, which is a region in contact with the second active material coating layer 810 and the fourth coating line 710_2 in FIG. 9. The fourth boundary portion 812 is described with reference to FIG. 11, but the same description equally applies to the first boundary portion to the third boundary.

In some embodiments, the height of the fourth coating line 710_2 may be higher than a height of the second active material coating layer 810. As a result, the active material slurry for forming the second active material coating layer 810 leans against a side surface of the fourth coating line 710_2, and thus, the second active material coating layer 810 may be formed. The second active material coating layer 810 may include the fourth boundary portion 812 in the region in contact with the fourth coating line 710_2.

In some embodiments, the fourth boundary portion 812 may have a bent region 814 at an upper end based on a height direction by being in contact with the fourth coating line 710_2. An angle of the bent region 814 with respect to the fourth boundary portion 812 may be about 70 degrees to about 80 degrees. As a result, the electrical utilization of regions on both sides of the active material coating layer may be low.

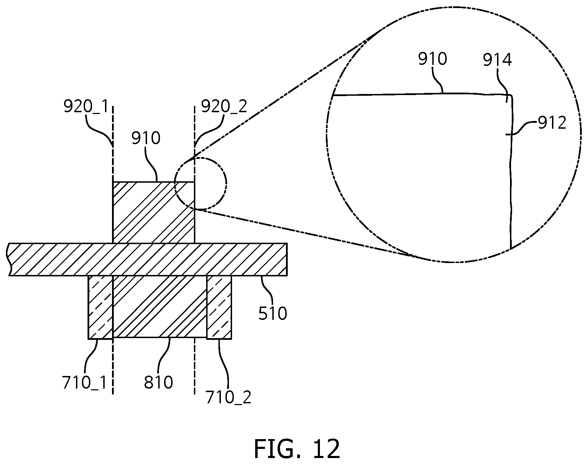

FIG. 12 is a diagram illustrating the edge portion of the etched active material coating layer according to some embodiments of the present disclosure. FIG. 12 may illustrate an enlarged view of a second edge portion 912 of the first etched active material coating layer 910 in FIG. 9. The second edge portion 912 is described with reference to FIG. 12, the same description equally applies to a first edge portion, a third edge portion, and a fourth edge portion.

The second edge portion 912 may be formed by etching the second boundary portion. The second edge portion 912 may include a bent region 914 at an upper end based on a height direction. An angle of the bent region 914 with respect to the second edge portion 912 may be about 80 degrees to about 90 degrees. As the bent region 914 of the second edge portion 912 becomes nearly vertical, the electrical utilization of regions of both sides of the active material coating layer can be increased.

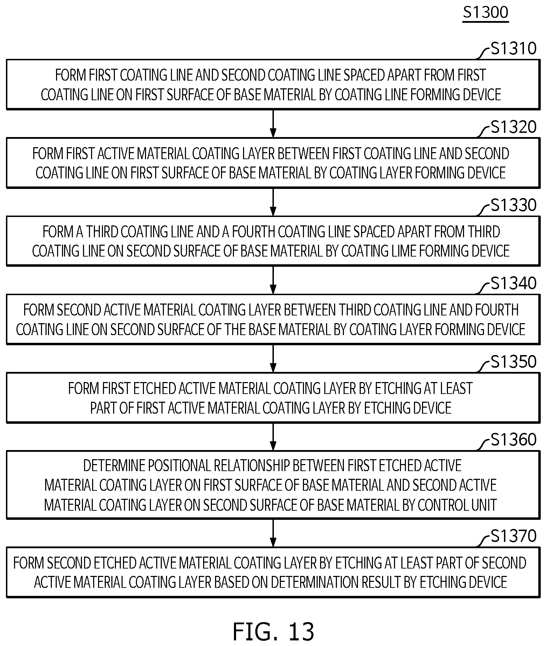

FIG. 13 is a flowchart illustrating an active material coating method (S1300) according to some embodiments of the present disclosure. The active material coating method (S1300) according to some embodiments of the present disclosure may be performed by the active material coating apparatus. The active material coating apparatus may include the transport device, the coating line forming device, the coating layer forming device, the etching device, the control unit 200, the first image sensor to the third image sensor, and the foreign substance removing device. The coating layer forming device may include the active material application device and the drying device.

First, the active material coating method (S1300) may be started by the coating line forming device forming the first coating line and the second coating line spaced apart from the first coating line on the first surface of the base material (S1310). In some embodiments, the transport device may transport the base material in one direction. For example, the coating line forming device may form the first coating line by applying the coating solution to the first line on the first surface of the base material. The coating line forming device may form the second coating line by applying the coating solution to the second line spaced apart from the first line on the first surface of the base material. In some embodiments, a viscosity of the coating solution may be 8,000 CPS or more.

In some embodiments, the coating layer forming device may form the first active material coating layer between the first coating line and the second coating line on the first surface of the base material (S1320). For example, the active material application device included in the coating layer forming device may apply the first active material slurry between the first coating line and the second coating line on the first surface of the base material.

In some embodiments, the coating line forming device may form the third coating line and the fourth coating line spaced apart from the third coating line on the second surface of the base material (S1330). For example, the coating line forming device may form the third coating line by applying the coating solution to the third line on the second surface of the base material. In addition, the coating line forming device may form the fourth coating line by applying the coating solution to the fourth line spaced apart from the third line on the second surface of the base material.

In some embodiments, the coating layer forming device may form the second active material coating layer between the third coating line and the fourth coating line on the second surface of the base material (S1340). In some embodiments, the first surface of the base material may face the second surface of the base material. In some embodiments, the first coating line, the second coating line, the third coating line, the fourth coating line, the first active material coating layer, and the second active material coating layer may be formed parallel to the transport direction of the base material. For example, the active material application device may apply the second active material slurry between the third coating line and the fourth coating line on the second surface of the base material. Thereafter, the drying device included in the coating layer forming device may form at least one of the first active material coating layer or the second active material coating layer by drying the base material.

In some examples, each of the first to fourth coating lines may include at least one of a binder, a ceramic, or a polyimide (PI).

In some embodiments, the etching device may form the first etched active material coating layer by etching at least a part of the first active material coating layer (S1350). For example, the control unit 200 may receive the first image obtained by capturing the first surface of the base material on which the first active material coating layer is formed. The control unit 200 may determine the positions of the first coating line and the second coating line on the first surface of the base material based on the first image. The etching device may etch the first coating line and at least a part of the first active material coating layer with the first width based on the determined position of the first coating line. The etching device may etch the second coating line and at least a part of the first active material coating layer with the first width based on the determined position of the second coating line.

In some embodiments, the etching device may etch at least a part of the first coating line and at least a part of the second coating line together with at least a part of the first active material coating layer.

In some embodiments, the control unit 200 may determine the positional relationship between the first etched active material coating layer on the first surface of the base material and the second active material coating layer on the second surface of the base material (S1360). For example, the control unit 200 may receive the second image obtained by capturing the second surface of the base material on which the second active material coating layer is formed. The control unit 200 may receive the third image obtained by capturing the first surface of the base material on which the first etched active material coating layer is formed. The control unit 200 may determine the positional relationship between the first etched active material coating layer and the second active material coating layer based on the second image and the third image. For example, the first etched active material coating layer may be etched to form the edge portion on one side of the first etched active material coating layer. The control unit 200 may determine the positional relationship between the edge portion and the second active material coating layer on the second surface of the base material.

In some embodiments, the etching device may form the second etched active material coating layer by etching at least a part of the second active material coating layer based on the determination result (S1370). For example, the etching device may etch the second active material coating layer with the second width from the position on the second surface of the base material corresponding to the edge portion toward the outside of the base material.

In some embodiments, the etching device may etch at least a part of the third coating line and at least a part of the fourth coating line together with at least a part of the second active material coating layer.

In some embodiments, the first active material coating layer and the second active material coating layer may be included in the active material coating layer, the first to fourth coating lines may be included in the coating line, the active material coating layer may be include the plurality of boundary portions in contact with the coating line, and the angle of the bent region for the plurality of boundary portions may be about 70 degrees to about 80 degrees. In some embodiments, the first etched active material coating layer and the second etched active material coating layer may be included in the etched active material coating layer. In some embodiments, the etched active material coating layer is etched to form the edge portion on one side of the etched active material coating layer, and the angle of the bent region with respect to the edge portion may be about 80 degrees to about 90 degrees.

In some embodiments, the foreign substance removing device may remove the foreign substance positioned on the base material.

In some embodiments, the first active material coating layer may include the first boundary portion in contact with the first coating line and the second boundary portion in contact with the second coating line, and the second active material coating layer may include the third boundary portion in contact with the third coating line and the fourth boundary portion in contact with the fourth coating line. The first etched active material coating layer may include the first edge portion formed by etching the first boundary portion and the second edge portion formed by etching the second boundary portion, the second etched active material coating layer may include the third edge portion formed by etching the third boundary portion and the fourth edge portion formed by etching the fourth boundary portion, the boundary portion of the first edge portion may correspond to the boundary portion of the third edge portion based on the width direction of the base material, and the boundary portion of the second edge portion may correspond to the boundary portion of the fourth edge portion based on the width direction of the base material.

The flow chart of FIG. 13 and the above description are merely examples of the present disclosure, and the scope of the present disclosure is not limited to the flow chart of FIG. 13 and the above description. For example, one or more steps in the flowchart and the above description may be added, changed, or deleted, the order of one or more steps may be changed, and one or more steps may be simultaneously performed.

Although the present disclosure has been described above with respect to embodiments thereof, the present disclosure is not limited thereto. Various modifications and variations can be made thereto by those skilled in the art within the scope of the appended claims.

## Claims

1. An active material coating method comprising:
forming, by a coating line forming device 220_1, a first coating line 120_1 and a second coating line 120_2 spaced apart from the first coating line 120_1 on a first surface of a base material 110;
forming, by a coating layer forming device, a first active material coating layer 130_1 between the first coating line 120_1 and the second coating line 120_2 on the first surface of the base material 110;
forming, by the coating line forming device 220_2, a third coating line 120_3 and a fourth coating line 120_4 spaced apart from the third coating line 120_3 on a second surface of the base material 110;
forming, by the coating layer forming device, a second active material coating layer 130_2 between the third coating line 120_3 and the fourth coating line 120_4 on the second surface of the base material 110;
forming, by an etching device 260_1, a first etched active material coating layer 140_1 by etching at least a part of the first active material coating layer 130_1;
determining, by a controller 200, a positional relationship between the first etched active material coating layer 140_1 on the first surface of the base material 110 and the second active material coating layer 130_2 on the second surface of the base material 110; and
forming, by the etching device 260_2, a second etched active material coating layer 140_2 by etching at least a part of the second active material coating layer 130_2 based on the positional relationship.

2. The active material coating method as claimed in claim 1,
(A) wherein each of the first coating line to the fourth coating line includes at least one of a binder, a ceramic, or polyimide (PI);
and/or
(B) further comprising:
transporting, by a transport device 202_1 202_2, the base material 210 in one direction A1 A2,
wherein the first coating line 320_1 320_2, the second coating line 320_1 320_2, the third coating line 320_1 320_2, the fourth coating line 320_1 320_2, the first active material coating layer 430, and the second active material coating layer 430 are formed parallel to the transport direction B of the base material 310.

3. The active material coating method as claimed in claim 1 or claim 2, wherein the forming of the first coating line 120_1 and the second coating line 120_2 spaced apart from the first coating line 120_1 comprises:
forming, by the coating line forming device 220_1, the first coating line 120_1 by applying a coating solution to a first line on the first surface of the base material 110; and
forming, by the coating line forming device 220_1, the second coating line 120_2 by applying the coating solution to a second line spaced apart from the first line on the first surface of the base material 110, and
wherein the forming of the third coating line 120_3 and the fourth coating line 120_4 spaced apart from the third coating line 120_3 comprises:
forming, by the coating line forming device 220_2, the third coating line 120_3 by applying the coating solution to a third line on the second surface of the base material 110; and
forming, by the coating line forming device 220_2, the fourth coating line 120_4 by applying the coating solution to a fourth line spaced apart from the third line on the second surface of the base material 110;
and, optionally, wherein a viscosity of the coating solution is 8,000 CPS or more.

4. The active material coating method as claimed in any preceding claim,
wherein the forming of the first active material coating layer 130_1 comprises:
applying, by an active material application device 230_1 comprised in the coating layer forming device, a first active material slurry between the first coating line 120_1 and the second coating line 120_2 on the first surface of the base material 110,
wherein the forming of the second active material coating layer 130_2 comprises:
applying, by the active material application device 230_2, a second active material slurry between the third coating line 120_3 and the fourth coating line 120_4 on the second surface of the base material 110, and
wherein the method further comprises:
forming, by a drying device 240_1 240_2 of the coating layer forming device, at least one of the first active material coating layer 130_1 or the second active material coating layer 130_2 by drying the base material 110.

5. The active material coating method as claimed in any preceding claim,
wherein the forming of the first etched active material coating layer 140_1 comprises:
receiving, by the controller 200, a first image obtained by capturing the first surface of the base material 110 on which the first active material coating layer 130_1 is formed;
determining, by the controller 200, positions of the first coating line 520_1 and the second coating line 520_2 on the first surface of the base material 510 based on the first image;
etching, by the etching device 260_1, the first coating line 520_1 and at least a part of the first active material coating layer 610 with a first width based on the determined position of the first coating line 520_1; and
etching, by the etching device 260_2, the second coating line 520_2 and at least a part of the first active material coating layer 610 with the first width based on the determined position of the second coating line 520_2.

6. The active material coating method as claimed in any preceding claim,
wherein the determining of the positional relationship comprises:
receiving, by the controller 200, a second image obtained by capturing the second surface of the base material 510 on which the second active material coating layer 810 is formed;
receiving, by the controller 200, a third image obtained by capturing the first surface of the base material 510 on which the first etched active material coating layer 910 is formed; and
determining, by the controller 200, the positional relationship between the first etched active material coating layer 910 and the second active material coating layer 810 based on the second image and the third image.

7. The active material coating method as claimed in claim 6, wherein the first surface of the base material 510 faces the second surface of the base material 510,
wherein the first etched active material coating layer 910 is etched to form an edge portion 912 on one side of the first etched active material coating layer 910, and
wherein the determining of the positional relationship between the first etched active material coating layer 910 and the second active material coating layer 810 based on the second image and the third image comprises:
determining, by the controller 200, a positional relationship between the edge portion 912 and the second active material coating layer 810 on the second surface of the base material 510.

8. The active material coating method as claimed in any preceding claim,
wherein the first surface of the base material 110 faces the second surface of the base material 110,
wherein the first etched active material coating layer 910 is etched to form an edge portion 912 on one side of the first etched active material coating layer 910, and
wherein the forming of the second etched active material coating layer 140_2 comprises:
etching, by the etching device 260_2, the second active material coating layer 810 with a second width from a position on the second surface of the base material 510 corresponding to the edge portion 912 toward an outside of the base material 510.

9. The active material coating method as claimed in any preceding claim,
(A) wherein the forming of the first etched active material coating layer 140_1 comprises:
etching, by the etching device 260_1, at least a part of the first coating line 520_1 and at least a part of the second coating line 520_2 together with at least a part of the first active material coating layer 610, and
wherein the etching of the at least a part of the second active material 140_2 coating layer comprises:
etching, by the etching device 260_2, at least a part of the third coating line 710_1 and at least a part of the fourth coating line 710_2 together with at least a part of the second active material coating layer 810;
and/or
(B) the first active material coating layer and the second active material coating layer are included in an active material coating layer, the first coating line to the fourth coating line are included in a coating line, the active material coating layer includes a plurality of boundary portions in contact with the coating line, and an angle of a bent region with respect to the plurality of boundary portions is 70 degrees to 80 degrees.

10. The active material coating method as claimed in any preceding claim,
(A) wherein the first etched active material coating layer 140_1 and the second etched active material coating layer 140_2 are comprised in an etched active material coating layer 910,
wherein the etched active material coating layer 910 is etched to form the edge portion 912 on one side of the etched active material coating layer 910, and
wherein an angle of the bent region 914 with respect to the edge portion 912is 80 degrees to 90 degrees;
and/or
(B) further including: removing, by a foreign substance removing device, foreign substances positioned on the base material.

11. The active material coating method as claimed in any preceding claim,
wherein the first surface of the base material 510 faces the second surface of the base material 50,
wherein the first active material coating layer 610 comprises a first boundary portion 812 in contact with the first coating line 520_1 and a second boundary portion 812 in contact with the second coating line 520_2,
wherein the second active material coating layer 810 comprises a third boundary portion 812 in contact with the third coating line 710_1 and a fourth boundary portion 812 in contact with the fourth coating line 710_2,
wherein the first etched active material coating layer 910 comprises a first edge portion 912 formed by etching the first boundary portion 812 and a second edge portion 912 formed by etching the second boundary portion 812,
wherein the second etched active material coating layer 1010 comprises a third edge portion 912 formed by etching the third boundary portion 812 and a fourth edge portion 912 formed by etching the fourth boundary portion 812,
wherein a boundary of the first edge portion 912 corresponds to a boundary of the third edge portion 912 based on a width direction of the base material 510, and
wherein a boundary of the second edge portion 912 corresponds to a boundary of the fourth edge portion 912 based on the width direction of the base material 510.

12. An active material coating apparatus comprising:
a coating line forming device 220_1 220_2 configured to form a first coating line 120_1 and a second coating line 120_2 spaced apart from the first coating line 120_1 on a first surface of a base material 110, and to form a third coating line 120_3 and a fourth coating line 120_4 spaced apart from the third coating line 120_3 on a second surface of the base material 110;
a coating layer forming device configured to form a first active material coating layer 130_1 between the first coating line 120_1 and the second coating line 120_2, and to form a second active material coating layer 130_2 between the third coating line 120_3 and the fourth coating line 120_4;
an etching device 260_1 configured to form a first etched active material coating layer 140_1 by etching at least a part of the first active material coating layer 120_1; and
a controller 200 configured to determine a positional relationship between the first etched active material coating layer 140_1 on the first surface of the base material 110 and the second active material coating layer 130_2 on the second surface of the base material 110,
wherein the etching device 260_2 is configured to form a second etched active material coating layer 140_2 by etching at least a part of the second active material coating layer 130_2 based on the positional relationship.

13. The active material coating apparatus as claimed in claim 12, wherein the coating layer forming device further comprises:
an active material application device 230_1 230_2 configured to apply an active material slurry between the first coating line 120_1 and the second coating line 120_2 on the first surface of the base material 110, and to apply an active material slurry between the third coating line 120_3 and the fourth coating line 120_4 on the second surface of the base material 110; and
a drying device 240_1 240_2 configured to form at least one of the first active material coating layer 130_1 or the second active material coating layer 130_2 by drying the base material 110.

14. The active material coating apparatus as claimed in claim 12 or claim 13, further comprising:
a first image sensor 250_1 configured to generate a first image obtained by capturing the first surface of the base material 210 on which the first active material coating layer 130_1 is formed,
wherein the controller 200 is configured to determine positions of the first coating line 120_1 and the second coating line 120_2 on the first surface of the base material 210 based on the first image, and
wherein the etching device 260_1 is configured to etch the first coating line 120_1 and at least a part of the first active material coating layer 130_1 with a first width, and to etch the second coating line 120_2 and at least a part of the first active material coating layer 130_1 with the first width.

15. The active material coating apparatus as claimed in any of claims 12 to 14,
(A) further comprising:
a second image sensor 250_2 configured to generate a second image obtained by capturing the second surface of the base material 110 on which the second active material coating layer 130_2 is formed; and
a third image sensor 250_3 configured to generate a third image obtained by capturing the first surface of the base material 110 on which the first etched active material coating layer 910 is formed,
wherein the controller 200 configured to determine the positional relationship between the first etched active material coating layer 910 and the second active material coating layer 810 based on the second image and the third image;
and/or
(B) wherein the active material coating apparatus further includes: a transport device configured to transport the base material in one direction; and a foreign substance removing device configured to remove foreign substances positioned on the base material.
